# EUROPEAN PATENT APPLICATION

(11) **EP 3 650 659 A1**
(43) Date of publication of application: **13.05.2020**
(21) Application number: 19202160.8
(22) Date of filing: 09.10.2019
(51) Int. Cl.: F01D 17/16, F04D 29/56

(54) **AN ACTUATION SYSTEM**

(30) Priority: 06.11.2018 GB 201818063
(71) Applicant: Rolls-Royce plc, London N1 9FX (GB)
(72) Inventor: Tramontin, Timothy, Derby, Derbyshire DE24 8BJ (GB)
(74) Representative: Rolls-Royce plc

(57) **Abstract**

There is disclosed a stator vane actuation arrangement comprising a plurality of stator vane assemblies. The stator vane actuation assemblies comprise a stator vane having a spindle and being rotatable about a spindle axis. The stator vane actuation assemblies also comprise a casing arranged around the spindle and moveable relative to the spindle. A linear-to-rotary mechanism is defined between the casing and the spindle such that linear movement of the casing along the spindle axis causes rotation of the spindle about the spindle axis. An actuator is included for linearly moving the casing relative the spindle along the spindle axis. There is also disclosed a gas turbine engine comprising the stator vane actuation arrangement and a method of actuating a plurality of variable stator vanes comprising actuating each of the plurality of stator vanes to rotate with the stator vane actuation arrangement.

## Description

### FIELD OF THE DISCLOSURE

The present disclosure relates to a stator vane actuation arrangement and a method of actuating a plurality of stator vanes to rotate using the stator vane actuation arrangement.

### BACKGROUND

Gas turbine engines comprise several stages of axial compression. In order to optimise performance of the engine and allow for acceptable engine operability through the flight envelope, stator vanes may be configured to pivot to vary their pitch or angle of incidence with respect to the annulus flow through the engine. One known arrangement for actuating such stator vanes is to provide a unison ring coupled to each of the stator rings and rotatable about a central axis of the engine to cause the stator vanes to pivot. One or more actuators with control rods acting on the unison ring may be disposed around the unison ring to drive rotation.

### SUMMARY

The present disclosure provides a stator vane actuation arranagement, a gas turbine engine comprising a stator vane actuation arrangement, and a method of actuating a plurality of variable stator vanes, as set out in the appended claims.

According to a first aspect, there is provided a stator vane actuation arrangement comprising a plurality of stator vane assemblies, each stator vane assembly comprising: a stator vane comprising a spindle and rotatable about a spindle axis; a casing arranged around the spindle and movable relative the spindle, wherein a linear-to-rotary mechanism is defined between the casing and the spindle such that linear movement of the casing along the spindle axis causes rotation of the spindle about the spindle axis; and an actuator configured for linearly moving the casing relative the spindle along the spindle axis.

The linear-to-rotary mechanism may comprise a pin-slot mechanism or a ball screw arrangement in each case comprising a guide track to define the relative rotary-to-linear movement. The guide track of the ball screw arrangement may be in the form of a race defined between the spindle and the casing for receiving a plurality of ball bearings. The casing may be cylindrical. The guide track may be helical. The guide track may have a variable helix angle along the length of the casing.

The casing may comprise two parts fixed together around the spindle. The spindle may comprise a rod fixed to an aerofoil of the stator vane, and a sleeve mounted on the rod and rotationally fixed with respect to the rod.

The stator vane actuation arrangement may comprise a controller configured to determine a current rotational position parameter relating to the current rotational position of each stator vane about the respective spindle axis. The controller may be configured to determine a target position parameter relating to a target rotational position of each stator vane about the respective spindle axis. The controller may be configured to control each actuator to move the respective casing along the respective spindle axis so that the stator vane moves from the current rotational position to the target rotational position.

The controller may be configured to determine an average current rotational position of the stator vanes of the plurality of stator vane assemblies, and to control each actuator to move each of the casings by an equal amount along the respective spindle axis, such that the stator vanes are moved to have an average target position corresponding to the target rotational position.

Each stator vane assembly may comprise a position sensor configured to determine a current linear position parameter relating to a current linear position of the casing along the spindle axis. The controller may be configure to receive the current linear position parameter from the position sensor and to control the actuator based on the current linear position parameter received from the position sensor. The position sensor may be a linear variable differential transformer on the casing. The position sensor may be a rotary variable differential transformer on the casing.

The actuator may be a hydraulic actuator or a pneumatic actuator in each case configured to drive the casing. The hydraulic actuator or the pneumatic actuator may comprise a fluid chamber defined by a cylinder surrounding the casing and a piston surface of the casing, whereby introduction of fluid into the fluid chamber acts on the piston surface of the casing which causes linear movement of the casing along the spindle axis.

The hydraulic actuator may comprise respective fluid chambers on either side of the casing with respective ports for supplying and discharging fluid.

The actuator may be a hydraulic actuator and the casing and spindle may be arranged to have a clearance gap between them so that hydraulic fluid provided to the chamber provides lubrication between the spindle and the casing.

The actuator may an electrical actuator.

According to a second aspect, there is provided a gas turbine engine comprising a stator vane actuation arrangement in accordance with the first aspect.

According to a third aspect, there is provided a method of actuating a plurality of variable stator vanes, the method comprising actuating each of a plurality of stator vanes to rotate, in a respective plurality of stator vane assemblies, with the stator vane actuation arrangement in accordance with the first aspect.

The method may comprise the controller determining a current rotational position parameter relating to the current rotational position of the stator vane about the spindle axis, and determining a target position parameter relating to a target rotational position of the stator vane about the spindle axis. The method may comprise the controller causing the actuator to move the casing linearly along the spindle axis so that each stator vane moves from the current rotational position to the target rotational position based on the current position parameter and the target position parameter.

The method may comprise the controller, determining an average current position parameter relating to an average current rotational position of the stator vanes, and causing the actuator to move each of the casings linearly along the respective spindle axis so that the stator vanes are moved to an average current rotational position corresponding to the target rotational position.

The method may comprise the controller causing each casing to move by an equal amount, despite variation in the rotary positon of the respective stator vanes.

The method may comprise determining a current linear position parameter relating to a current linear position of the casing of each of the stator vane assemblies along the spindle axis with a position sensor, and the controller receiving the current linear position parameter from the position sensor to determine the current linear position of each casing relating to the current rotational position of the stator vane.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above. In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments of the invention with now be described, by way of example only, with reference to the accompanying drawings, in which:
**Figure 1** is a sectional side view of a gas turbine engine;
**Figure 2** is a schematic view of an example stator vane actuation arrangement;
**Figure 3** is an exploded view of an example stator vane assembly;
**Figure 4** shows a stator vane actuation arrangement with a sectional view of a stator vane assembly;
**Figure 5** shows a cross-sectional view of a second example stator vane assembly; and
**Figure 6** is a flow chart showing steps of a method to actuate a plurality of stator vanes to rotate.

### DETAILED DESCRIPTION

Aspects and embodiments of the present disclosure will now be discussed with reference to the accompanying figures. Further aspects and embodiments will be apparent to those skilled in the art.

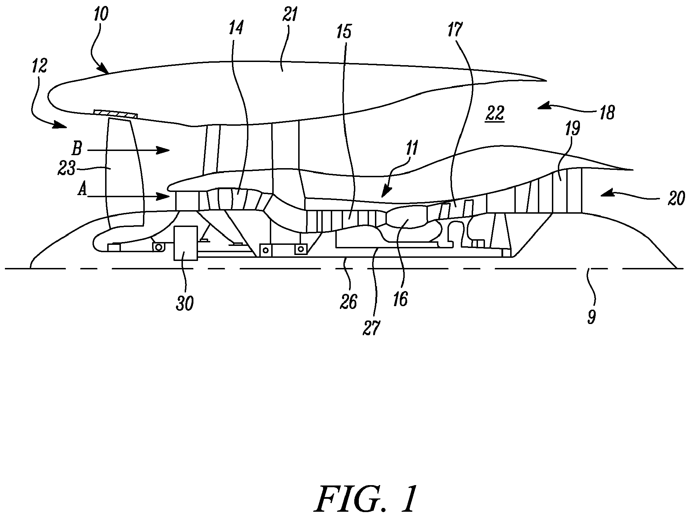

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

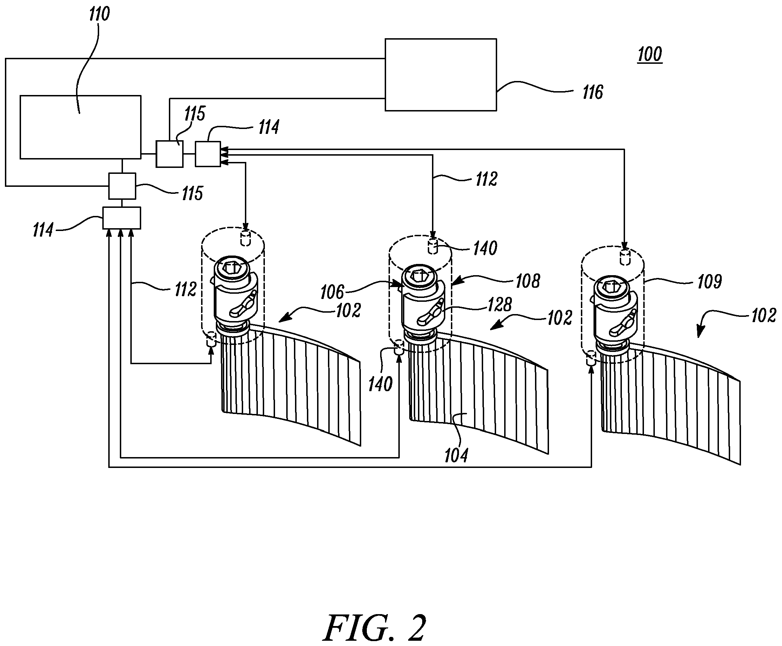

**Figure 2** shows a stator vane actuation arrangement 100 for actuating a plurality of variable stator vanes 104 to rotate. The stator vane actuation arrangement 100 may be used in a gas turbine engine for rotation of variable stator vanes in the compressors.

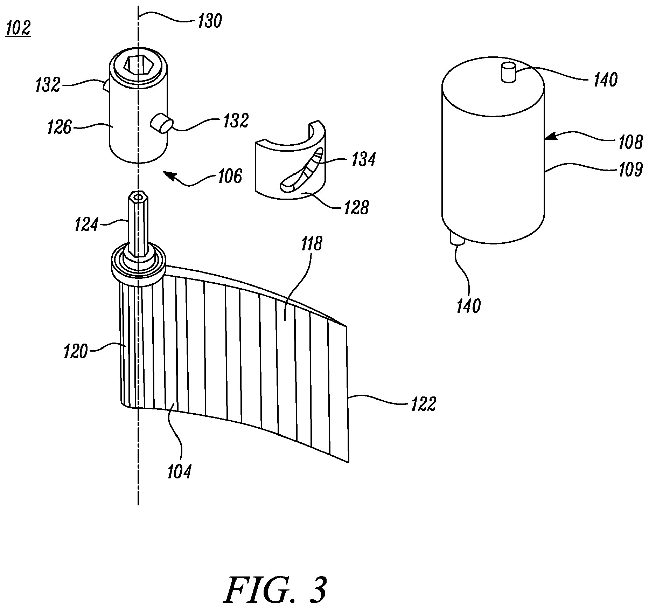

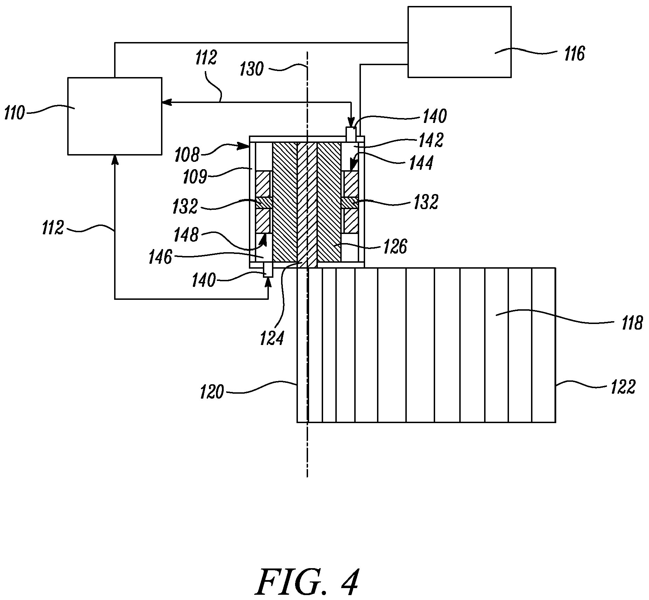

The stator vane actuation arrangement 100 comprises a plurality of stator vane assemblies 102 according to a first example. Figure 2 shows three identical stator vane assemblies 102. In other examples there may be more than three stator vane assemblies 102.
Each stator vane assembly 102 comprises a stator vane 104 having a spindle 106, a casing 128 arranged around the spindle 106 and moveable relative the spindle 106, and an actuator 108. In this example, a linear-to-rotary mechanism is defined between the spindle 106 and the casing 128, so that linear movement of the casing 128 relative the spindle 106 causes rotational movement of the stator vane 104. The linear-to-rotary mechanism will be described in more detail with reference to Figures 3 and 4.

In this example, the actuator 108 is a hydraulic actuator comprising a cylinder 109 surrounding the casing 128 and the spindle 106. Each hydraulic actuator 108 comprises two fluid ports 140, each connected to a central fluid source 110 by a respective fluid line 112. The fluid lines 112 connect to the central fluid source 110 via two manifolds 114, one manifold 114 connecting a first fluid port 140 of each of the actuators 108 to the central fluid source 110, and a second manifold 114 connecting the other (i.e. a second) of the fluid ports 140 of each of the actuators 108 to the central fluid source 110. In some examples, each of the stator vane assemblies may be directly fluidically connected to a fluid source without a manifold, or there may be at least one manifold connecting different numbers of fluid ports 140 to the central fluid source 110.

Each of the manifolds 114 are connected to the fluid source with a respective fluid driver 115. The fluid drivers 115 comprise a valve, such as a servo-valve, and a pump and are configured to drive fluid from the fluid source through the respective manifold 114, and therefore through the plurality of fluid lines 112, or to permit the discharge of fluid from the fluid lines 112 into the fluid source.

The stator vane actuation arrangement 100 further comprises a controller 116 which is connected to the fluid drivers 115, and is configured to provide control signals to each of the fluid drivers 115 to control the introduction and discharge of fluid to and from each actuator 108, so as to control the rotation of each stator vane 104. In use, the central fluid source may be the low pressure fuel feed from a main engine of a gas turbine engine.

Although it is shown in Figure 2 that the fluid ports 140 are positioned on the top and bottom of the actuator 108, in other examples, the fluid ports may be positioned elsewhere. For example, both ports may be provided toward the top of the actuator such that they are further away from the hot gas around the aerofoil.
**Figures 3** **and** **4** show the first example stator vane assembly 102 in more detail. Figure 3 shows an exploded view of the stator vane assembly 102, having the stator vane 104, the spindle 106, the casing 128 and the actuator 108. Figure 4 shows a schematic cross-sectional view of a first example stator vane assembly 102 connected to the central fluid source 110 and the controller 116.

The stator vane 104 comprises an aerofoil 118 having a leading edge 120 and a trailing edge 122, the stator vane 104 further comprising the spindle 106 extending from the aerofoil 118. In this example, the spindle 106 comprises a rod 124 extending from a chord-wise portion proximate the leading edge 120 of the aerofoil 118, which defines a spindle axis 130. In other examples, the rod may extend from any point along the chord on the aerofoil, such as the centre of the aerofoil which may better suit the force required to actuate due to the different relative position of axis of rotation and an aerodynamic axis.

In this example, the spindle 106 further comprises a sleeve 126 surrounding the rod 124. The sleeve 126 has a cylindrical outer profile and a central aperture which is keyed with the rod 124 (i.e. is configured to fit around the rod 124 so as to rotationally fix the sleeve 126 with respect to the rod 124), and is configured such that the sleeve 126 and rod 124 are coaxial when assembled. In this example, the rod 124 and the aperture in the sleeve 126 have corresponding hexagonal cross-sections. In other examples, the rod and the aperture may have any suitable cross-sectional shape. The stator vane 104 (i.e. the aerofoil 118 and spindle 106) is rotatable about the spindle axis 130 in the stator vane assembly 102.

The sleeve 126 also comprises two pegs 132 on diametrically opposing sides of the sleeve 126, protruding from the sleeve 126 in a direction perpendicular to the spindle axis 130. In some examples, the spindle may not include a sleeve and the pegs may be disposed directly on the rod.

The casing 128 is configured to surround the spindle 106 and comprises two opposing parts, only one of which is shown in Figure 3 for simplicity. Each part comprises a guide track in the form of a through slot 134 for receiving one of the pegs 132 of the sleeve 126.

The casing 128 comprises two parts in order to simplify assembly of the stator vane assembly 102. The two parts of the casing 128 are applied onto the spindle 106 (i.e. onto the sleeve 126) such that the pegs 132 are received within the slots 134, and the parts are fixed together to form the casing 128 surrounding the sleeve 126. In other examples, the pegs may be removable from the spindle such that the casing can be supplied in one part, slid over the spindle without the pegs, and the pegs can be inserted into receiving holes in the spindle through the slots.

In this example, the casing 128 is cylindrical and fits around the sleeve 126 with a clearance gap between the casing 128 and the sleeve 126, so that hydraulic fluid in the actuator 108 can act as a lubricant between the spindle 106 and the casing 128. Each part of the casing 128 in this example is a half cylinder and the slot 134 in each part is therefore helical. The helical slot in this example has a constant helix angle. In other examples, the helical slot may have a varying helix angle along the length of the casing to optimise the mechanical advantage and slew rate across a power range.

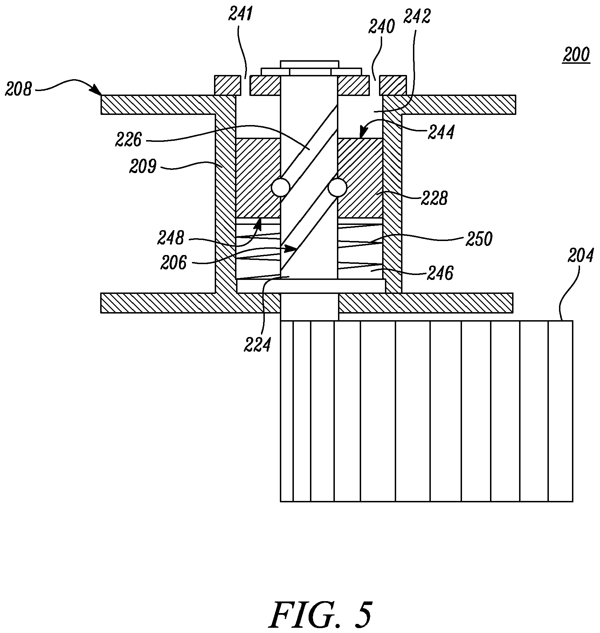

The pegs 132 and slot 134 of the spindle 106 and casing 128 respectively form a pin-slot mechanism, wherein the guide track (i.e. the slot 134) defines the relative linear-to-rotary movement. In some examples, the spindle may comprise a guide track and the casing may comprise a corresponding peg. In other examples, the linear-to-rotary mechanism 106 may comprise a bearing mechanism in which the peg and sleeve are replaced with a ball screw arrangement, such as the bearing mechanism described with respect to Figure 5 below.

In other examples, there may be only one peg on the sleeve and there may be only one slot in the casing, where one of the casing parts has a slot, and the other part does not have a slot.

Since the pegs 132 of the sleeve 126 are retained within the slot 134 of the casing 128 in the form of a pin-slot mechanism, movement of the casing 128 along the spindle axis 130 (i.e. in a direction parallel to the spindle axis 130), causes rotation of the sleeve 126 about the spindle axis 130, which causes rotation of the rod 124, and therefore of the stator vane 104 about the spindle axis 130.

The actuator 108 is configured to drive the casing linearly along the spindle axis 130 relative the spindle 106 to actuate the stator vane 104 to rotate.
As shown in Figure 4, a first chamber 142 is defined between the cylinder 109 of the actuator 108 surrounding the casing 128, a first piston surface 144 of the casing 128 and the outer wall of the sleeve 126. A second chamber 146, on an opposing side of the casing 128 to the first chamber 142, is defined between the cylinder 109 of the actuator 108, a second piston surface 148 of the casing 128 on an opposing side of the casing 128 to the first piston surface 144, and the outer wall of the sleeve 126.

A first port 140 in the actuator 108 allows introduction and discharge of fluid to and from the first chamber 142, and a second fluid port 140 allows introduction and discharge of fluid to and from the second chamber 146. Both fluid ports 140 are supplied with fluid by the fluid lines 112 extending from the central fluid source 110.

Introduction of fluid into the first chamber 142 through the first fluid port 140 acts on the first piston surface 144 of the casing 128 which causes linear movement of the casing 128 along the spindle axis 130 in a first direction towards to the aerofoil 118. The linear movement of the casing 128 in the first direction forces fluid out of the second chamber 146, and the second fluid port 140 allows discharge of the fluid from the second chamber 146 into the central fluid source 110.

Introduction of fluid into the second chamber 144 through the second fluid port 140 acts on the second piston surface 148 of the casing 128 which causes linear movement of the casing 128 along the spindle axis 130 in a second direction (i.e. parallel and opposite to the first direction). The movement of the casing 128 in the second direction forces fluid out of the first chamber 142, and the first fluid port 140 allows discharge of the fluid into the central fluid source 110.

The introduction of fluid into the first or second fluid chambers 142, 146 and the discharge of fluid from the first or second fluid chambers 142, 146 is controlled by the controller 116 via the valve (such as a servo-valve).

In some examples, the cylinder of the actuator may comprise a single port to the first chamber or a first port which only allows introduction of fluid into the first chamber and a second port which only allows discharge of fluid from the first chamber. In such examples, the second chamber may comprise a biasing means such as a spring, to bias the casing in the second direction towards the first chamber. Such an example is described with reference to Figure 5 below.

The controller 116 is configured to determine a current position parameter relating to the current rotational position of the stator vane 104 about the spindle axis 130, and a target position parameter relating to a target rotational position of the stator vane 104.

The linear position of the casing 128 along the sleeve 126 is directly related to the rotational position of the spindle 106 about the spindle axis 130, and therefore of the rotational position of the stator vane 104. The controller 116 is configured to control the rotational position of the stator vane 104 by controlling the linear position of the casing 128, which is achieved by controlling the introduction and discharge of fluid from the first and second fluid chambers 142, 146.

In this example, the spindle 106 comprises a position sensor to monitor the position of the casing 128 along the spindle 106. In this example, the position sensor is a linear variable differential transformer, LVDT (not shown). The LVDT is configured to determine a current position parameter related to the current linear position of the casing 128 (which is related to the current rotational positon of the stator vane 104). The controller 116 is configured to receive the current position parameter from the LVDT, and to control the introduction and discharge of fluid from the first and second chambers 142, 146 based on the current position parameter to move the casing 128 to a target linear position corresponding to the target rotational position of the stator vane 104.

In other examples, the position sensor may be a rotary variable differential transformer (RVDT) to measure a current rotational position of the stator vane directly.

In some examples, the controller may determine the current position of the casing based on a starting position of the casing and a history of the controls of moving the casing. In other examples, the controller may calibrate the position at engine startup, by moving to one end of a movement range as a "datum" position. However, with a position sensor measuring the current position of the casing 128, a more accurate determination of the current linear position of the casing can be made.

Referring back to Figure 1, a plurality of stator vane assemblies 102 are present in the stator vane actuation arrangement 100. Generally, all of the stator vanes 104 in the plurality of stator vanes 104 are configured to have the same rotational position. However, the rotational position of each stator vane can vary due to manufacturing and assembly tolerances or variable resistance to rotational movement between the stator vanes ("sticking") as a result of thermo-mechanical distortion of the casing or flight loads.

The controller 116 is configured to determine an average current position parameter relating to an average of the current rotational positions of the stator vanes 104. Based on the average current position parameter, the controller 116 is configured to send a single control signal to the fluid driver such that each of the actuators 108 is driven by fluid of the same pressure to control each of the actuators 108 to move by the same amount. Therefore, each of the stator vanes 104 are moved so that the average rotational position of the plurality of stator vanes 104 is at the target rotational position. The manifolds 114 are configured so that the pressure in each of the respective fluid lines is substantially equal, such that like stator vane assemblies 102 are caused to move by substantially the same amount.

Since each stator vane 104 is actuated individually with a respective actuator rather than a unison ring subject to distortion which may result in mal-schedule of angularly spaced stator vanes, each of the stator vanes moves as a function of the pressure supplied through the fluid lines, which can be equal between the plurality of stator vanes. Further, since each actuator is fed by a central reservoir of fluid, the actuators can each be small as they need only provide sufficient force to rotate one stator vane, and can therefore free up space in the gas turbine engine. Furthermore, since each actuator is configured to rotate only a single stator vane, only a low pressure hydraulic fluid feed is required to rotate the stator vanes. Further, piston area can be adjusted for each individual actuator to ensure the whole hydraulic system is kept at an optimal pressure.

**Figure 5** shows a cross sectional view of a second example of a stator vane assembly 200 which can be used with the stator vane actuation arrangement 100 instead of the first example stator vane assembly 102. The stator vane assembly 200 comprises a stator vane 204 having a spindle 206 which is similar to the spindle 106 of the first example stator vane assembly 102. In this example, the spindle comprises a rod 224 having a helical half race or slot 226 for receiving a plurality of ball bearings.

The stator vane assembly 200 also comprises a casing 228 which is similar to the casing 128 of the first example stator vane assembly 102. However, in this example, the guide track of the casing 228 is in the form of a helical half race to receive a plurality of ball bearings. The helical half races in the casing 228 and the spindle 206 form a race between them for receiving a plurality of ball bearings.

A linear-to-rotary mechanism is defined between the spindle 206 and the casing 228. The linear-to-rotary mechanism in this example comprises a ball screw arrangement between the helical slot 226 of the spindle 206 and the helical slot of the casing 228, each arranged to receive a plurality of ball bearings, so that linear movement of the casing 228 results in rotary movement of the spindle 206.

The stator vane assembly 200 further comprises a hydraulic actuator 208 which is similar to the actuator 108 of the first example stator vane assembly 102. A cylinder 209 surrounds the spindle 206 and casing 228 and forms a first chamber 242 defined between the cylinder 209, the spindle 206 and a first piston surface 244 of the casing, and a second chamber 246 on an opposing side of the casing 228, defined between the cylinder 209, the spindle 206 and a second piston surface 248.

The stator vane assembly 200 further comprises position sensors as described in the first example stator vane assembly 102.

In this example, the cylinder 209 of the hydraulic actuator 208 comprises a first fluid port 240 for allowing introduction of fluid into the first chamber 242, and a second fluid port 241 for allowing discharge of fluid from the first chamber 242. The second chamber 246 comprises a spring 250 acting on the second piston surface 248 to bias the casing 228 towards the first chamber 242.

In this example, the casing 228 and the spindle 206 are configured such that fluid introduced into the first chamber 242 increases the pressure in the first chamber 242 to act on the first piston surface 244 of the casing 228. The pressure acts against the force applied by the spring 250 to the casing 228, to drive the casing 228 in a first direction towards to the aerofoil of the stator vane. Discharging fluid from the first chamber 242 reduces the pressure in the first chamber 242, and therefore the force of the fluid on the first surface 244 of the casing 228 such that the casing 228 moves in a second direction, towards the first chamber 242.

Although it has been described that the actuator is a hydraulic actuator, in some examples, it may be a pneumatic actuator having one or more ports as described above, and without a clearance gap between the casing and the sleeve. In other examples, the actuator may be an electrical actuator configured to mechanically drive the casing in the first or second direction with a solenoid, for example, or to mechanically drive the casing in the first direction, with a spring biasing the casing in the second direction. In such an example, there is no requirement for ports for introducing fluids to a cylinder.

Although it has been described that there may be a clearance gap between the spindle and the casing of the stator vane assembly so that hydraulic fluid may provide lubrication between them, in other examples, the friction may be minimised by a linear bearing arrangement between the spindle and the casing.

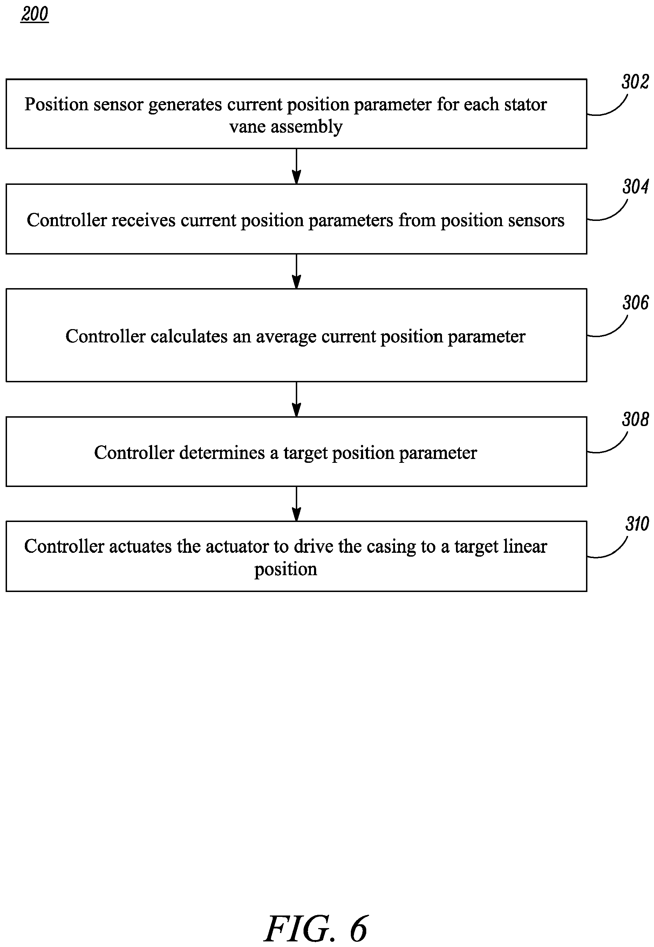

**Figure 6** is a flow chart showing steps of a method 200 of actuating the plurality of stator vanes 104 of the stator vane assemblies 102, described above with reference to Figures 2-5, to rotate.

In step 302, each of the position sensors in the plurality of stator vane assemblies 102 generates a current position parameter relating to the current linear position of the respective casing 128, 228 along the respective spindle 106, 206, and therefore to the current rotational position of the respective stator vane 104, 204.

In step 304 the controller 116 determines the current position parameters from the plurality of position sensors. In some examples, where there are no position sensors, the controller may determine the current position parameter of each of the stator vanes by calculating an approximate current position based on a starting point of the stator vanes and previous control commands to move the stator vanes.

In step 306, the controller calculates an average current position parameter based on the received position parameters from each of the stator vane assemblies 102. In other examples, the average current position parameter may be based on the current position parameters of a representative selection of stator vane assemblies.

In step 308, the controller determines a target position parameter relating to a target linear positon of the casing 128, 228, and therefore to a target rotational position of the stator vane 104, 204.

In step 310, the controller 116 actuates each of the actuators 108, 208 to drive the respective casings 128, 228 from a current linear position to a target linear position corresponding to the target rotational position of the stator vane, based on the current position parameter and the target position parameter. The controller 116 actuates each of the actuators 108, 208 in the same manner. Accordingly, only one control command is required to actuate the plurality of stator vanes, and therefore the controller 116 is less complex than if it were calculating a target movement of each actuator, and actuating each actuator individually.

If the stator vanes are all in the same position (i.e. there is no mal-schedule within the plurality), then the average current position parameter will simply be that position, and the control signal to the fluid driver would result in the actuators being moved by identical amounts to if they were controlled individually. However, due to error margins in manufacturing, and rotational resistance ("sticking"), or other factors during use of variable stator vanes, it is possible that the variable stator vanes will not be in the same position (i.e. there will be some malschedule). The controller 116 will then control the stator vanes 104, 204 to rotate by the same amount, so that the average position of the stator vanes is at the target position, rather than each of the stator vanes 104, 204 individually being in a respective target position.

The use of the integral stator vane and actuator as described above allows finer and more accurate control of the position of the stator vanes. Further, the calculation of the average current position of the stator vanes to inform the movement required to reach an average target position allows the use of a simpler controller for controlling the rotation of the variable vanes than if each stator vane was controlled individually. Therefore, the accuracy of control is increased without significantly increasing the complexity and cost of the controller.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A stator vane actuation arrangement (100) comprising a plurality of stator vane assemblies (102, 200), each stator vane assembly comprising:
a stator vane (104, 204)) comprising a spindle (106, 206) and rotatable about a spindle axis (130);
a casing (128, 228) arranged around the spindle and movable relative the spindle, wherein a linear-to-rotary mechanism is defined between the casing and the spindle such that linear movement of the casing along the spindle axis causes rotation of the spindle about the spindle axis; and
an actuator (108, 208) configured for linearly moving the casing relative the spindle along the spindle axis.

2. The stator vane actuation arrangement of claim 1, wherein the linear-to-rotary mechanism comprises a pin-slot mechanism or a ball screw arrangement in each case comprising a guide track (134) to define the relative rotary-to-linear movement.

3. The stator vane actuation arrangement of claim 2, wherein the linear-to-rotary mechanism comprises a ball screw arrangement and the guide track of the ball screw arrangement is in the form of a race defined between the spindle and the casing (128, 228) for receiving a plurality of ball bearings.

4. The stator vane actuation arrangement of claim 2 or 3, wherein the casing (128, 228) is cylindrical and the guide track (134) is helical.

5. The stator vane actuation arrangement of any preceding claim, wherein the casing (128, 228) comprises two parts fixed together around the spindle (106, 206).

6. The stator vane actuation arrangement of any preceding claim, wherein the spindle (106, 206) comprises a rod (124) fixed to an aerofoil (118) of the stator vane (104, 204), and a sleeve (126) mounted on the rod and rotationally fixed with respect to the rod.

7. The stator vane actuation arrangement of any preceding claim, comprising a controller (116) configured to determine a current rotational position parameter relating to the current rotational position of each stator vane (104, 204) about the respective spindle axis, and a target position parameter relating to a target rotational position of each stator vane about the respective spindle axis (130), and to control each actuator (108, 208) to move the respective casing (128, 228) along the respective spindle axis so that the stator vane moves from the current rotational position to the target rotational position.

8. The stator vane actuation arrangement of claim 7, wherein the controller (116) is configured to determine an average current rotational position of the stator vanes (104, 204) of the plurality of stator vane assemblies (102, 200), and to control each actuator (108, 208) to move each of the casings (128, 228) by an equal amount along the respective spindle axis (130), such that the stator vanes are moved to have an average target position corresponding to the target rotational position.

9. The stator vane actuation arrangement of claim 7 or 8, each stator vane assembly (102, 200) comprising a position sensor configured to determine a current linear position parameter relating to a current linear position of the casing along the spindle axis, wherein the controller is configured to receive the current linear position parameter from the position sensor and to control the actuator based on the current linear position parameter received from the position sensor.

10. The stator vane actuation arrangement of claim 9, wherein the position sensor is a linear variable differential transformer or a rotary variable differential transformer on the casing (128, 228).

11. The stator vane actuation arrangement of any preceding claim, wherein the actuator (108, 208) is a hydraulic actuator or a pneumatic actuator in each case configured to drive the casing (128, 228).

12. The stator vane actuation arrangement of claim 11, wherein the hydraulic actuator or the pneumatic actuator (108, 208) comprises a fluid chamber defined by a cylinder surrounding the casing (128, 228) and a piston surface 144, 148) of the casing, whereby introduction of fluid into the fluid chamber acts on the piston surface of the casing which causes linear movement of the casing along the spindle axis (130).

13. The stator vane actuation arrangement of claim 11, wherein the actuator (108, 208) is a hydraulic actuator that comprises respective fluid chambers (142, 146) on either side of the casing with respective ports (140) for supplying and discharging fluid.

14. The stator vane actuation arrangement of any one of claims 11 to 13, wherein the actuator (108, 208) is a hydraulic actuator and the casing (128, 228) and spindle (106, 206) are arranged to have a clearance gap between them so that hydraulic fluid provided to the chamber provides lubrication between the spindle and the casing.

15. A gas turbine engine (10) comprising a stator vane actuation arrangement (100) according to any one of claims 1 to 14.

16. A method of actuating a plurality of variable stator vanes, the method comprising actuating each of a plurality of stator vanes (104, 204) to rotate, in a respective plurality of stator vane assemblies (102, 200), with the stator vane actuation arrangement (100) in accordance with any one of claims 1 to 14.
